# EUROPEAN PATENT APPLICATION

(11) **EP 4 585 819 A1**
(43) Date of publication of application: **16.07.2025**
(21) Application number: 23863049.5
(22) Date of filing: 30.08.2023
(51) Int. Cl.: F16C 33/78, F16C 19/18, F16C 33/58, F16J 15/3276

(54) **WHEEL BEARING DEVICE**

(30) Priority: 07.09.2022 JP 2022142336
(71) Applicant: NTN Corporation, Osaka-shi Osaka 530-0005 (JP)
(72) Inventor: KONISHI Ryo, Iwata-shi, Shizuoka 438-8510 (JP)
(74) Representative: Grünecker Patent- und Rechtsanwälte PartG mbB
(86) International application number: PCT/JP2023/031512
(87) International publication number: WO 2024/053511

(57) **Abstract**

A wheel bearing device 1 comprises: an outer wheel 2 (external member); a hub wheel 3 and an inner wheel 4 (internal member); a ball 8 (rolling body); and an outer-side seal member 10 (seal member). The outer-side seal member 10 has a cored bar 11 and a seal section 12. The seal section 12 has: a projection 12e that protrudes toward the inner side and contacts an outer-side end surface 2g of the outer wheel 2; and a protrusion 12f that is disposed radially outward of the projection 12e, that protrudes toward the inner side, and that contacts a chamfered section 2h of the outer wheel 2.

## Description

### TECHNICAL FIELD

The present invention relates to a bearing device for a vehicle wheel.

### BACKGROUND ART

Conventionally, a bearing device for a vehicle wheel for automobiles is known. The bearing device for a vehicle wheel includes an outer ring (outer member) having an outer raceway surface formed on an inner periphery thereof, an inner ring (inner member) having an inner raceway surface formed to face the outer raceway surface of the outer ring, a plurality of balls (rolling body) interposed in a rollable manner between both raceway surfaces of the outer ring and the inner ring, and a seal member closing an opening of a space formed between the outer ring and the inner ring (see Patent Literature 1).

### CITATIONS LIST

### PATENT LITERATURE

Patent Literature 1: WO 2020/012953 A1 Gazette

### SUMMARY OF INVENTION

### TECHNICAL PROBLEMS

In the bearing device for a vehicle wheel, the seal member includes a projection that is in contact with an inner peripheral surface (alternatively, the outer-side end surface of the outer ring) of the outer ring, thereby improving sealability between the seal member and the inner peripheral surface of the outer ring. However, there is a possibility that the entry of muddy water or the like to the projection side promotes the deterioration of the projection, and the sealability between the seal member and the inner peripheral surface of the outer ring is not maintained.

In this regard, an object of the present invention is to provide a bearing device for a vehicle wheel capable of suppressing entry of muddy water or the like to a projection side and maintain sealability provided by the projection for a relatively long period.

### SOLUTIONS TO PROBLEMS

That is, the bearing device for a vehicle wheel includes: an outer member that has an outer raceway surface formed on an inner periphery thereof; an inner member that has an inner raceway surface formed to face the outer raceway surface; a plurality of rolling bodies that are interposed in a rollable manner between both raceway surfaces of the outer member and the inner member; and a seal member that closes an opening of an annular space formed between the outer member and the inner member. The outer member has a chamfered section formed by chamfering a boundary portion between an outer-diameter outer surface and an end surface of the outer member, the seal member includes a core metal and a seal section fixed to the core metal, and the seal portion includes a projection that protrudes toward the outer member to be in contact with the end surface of the outer member, and a protrusion that is disposed radially outward of the projection and protrudes toward the outer member to be in contact with the chamfered section of the outer member.

### ADVANTAGEOUS EFFECTS OF INVENTION

As effects of the present invention, the following effects are obtained.

That is, according to the invention of the present application, it is possible to suppress the entry of muddy water or the like to the projection side and to maintain the sealability provided by the projection for a relatively long period.

### BRIEF DESCRIPTION OF DRAWINGS

FIG. 1 is a cross-sectional view illustrating a bearing device for a vehicle wheel according to an embodiment of the present invention.
FIG. 2 is an enlarged sectional view illustrating the bearing device for a vehicle wheel.
FIG. 3 is an enlarged cross-sectional view illustrating an outer-side seal member of the bearing device for a vehicle wheel.
FIG. 4 is an enlarged sectional view illustrating the bearing device for a vehicle wheel.

### DESCRIPTION OF EMBODIMENTS

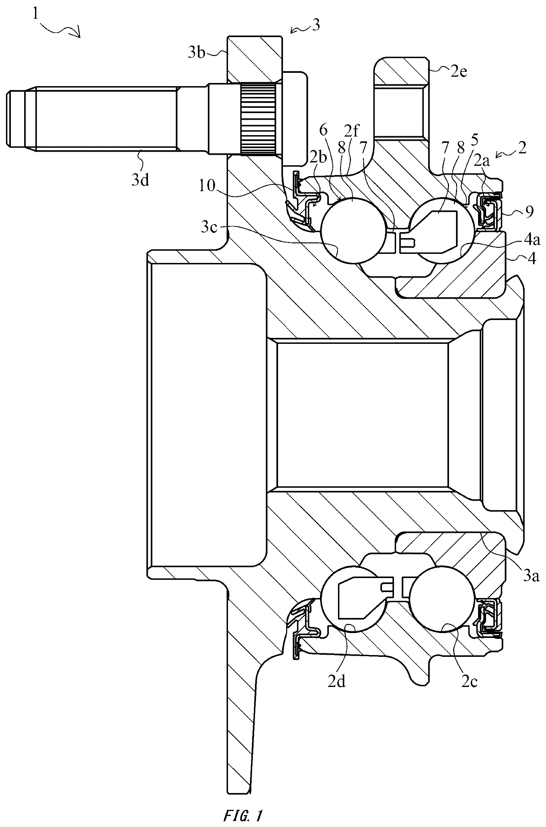

Hereinafter, a bearing device for a vehicle wheel 1 which is an embodiment of a bearing device for a vehicle wheel according to the present invention will be described with reference to FIGS. 1 to 4.

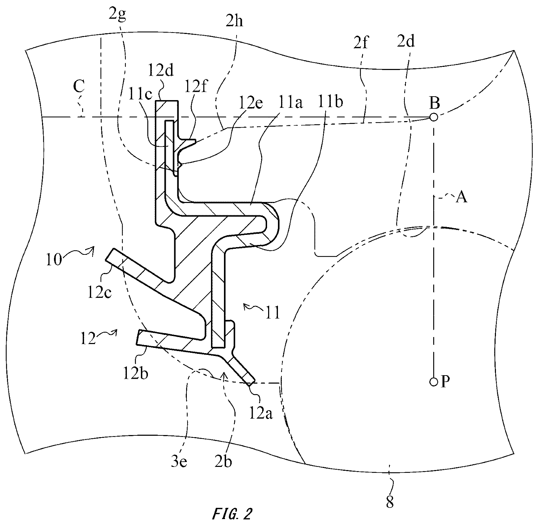

As illustrated in FIG. 1 or 2, the bearing device for a vehicle wheel 1 rotatably supports a wheel in a suspension device of a vehicle such as an automobile. The bearing device for a vehicle wheel 1 includes an outer ring 2 that is an outer member, a hub ring 3 that is an inner member, an inner ring 4, two rows of an inner-side ball row 5 and an outer-side ball row 6 that are rolling rows, an inner-side seal member 9 that is a seal member, and an outer-side seal member 10 that is a seal member. Here, in the present specification, the inner side represents the vehicle body side of the bearing device for a vehicle wheel 1 when the bearing device for a vehicle wheel 1 is mounted to a vehicle body, and the outer side represents the wheel side of the bearing device for a vehicle wheel 1 when the bearing device for a vehicle wheel 1 is attached to the vehicle body. In addition, a direction parallel to a rotation axis of the bearing device for a vehicle wheel 1 is referred to as an "axial direction", a direction orthogonal to the rotation axis of the bearing device for a vehicle wheel 1 is referred to as a "radial direction", and a direction along an arc centered on the rotation axis of the bearing device for a vehicle wheel 1 is referred to as a "circumferential direction".

The outer ring 2 supports the hub ring 3 and the inner ring 4 via the inner-side ball row 5 and the outer-side ball row 6. The outer ring 2 is formed in a substantially cylindrical shape. An outer raceway surface 2c on the inner side and an outer raceway surface 2d on the outer side are provided on an inner diameter surface of the outer ring 2. A vehicle body mounting flange 2e for mounting to a knuckle of the suspension device is integrally formed on the outer peripheral surface of the outer ring 2.

The hub ring 3 rotatably supports a wheel of the vehicle. The hub ring 3 is formed in a columnar shape. At the inner-side end of the hub ring 3, a small-diameter step portion 3a reduced in diameter is formed on the outer peripheral surface. A wheel mounting flange 3b for mounting a wheel is integrally formed at an outer-side end of the hub ring 3. A hub bolt 3d is inserted through the wheel mounting flange 3b at a circumferentially equal distribution position. In addition, the hub ring 3 is disposed such that an inner raceway surface 3c on the outer side faces the outer-side outer raceway surface 2d of the outer ring 2. The inner ring 4 is fitted to the small-diameter step portion 3a of the hub ring 3.

An annular space is formed between the inner diameter surface of the outer ring 2 and the outer shape surface of the hub ring 3. An inner-side opening 2a into which the inner-side seal member 9 can be fitted is formed at an inner-side end of the annular space formed between the outer ring 2 and the hub ring 3. An outer-side opening 2b into which the outer-side seal member 10 can be fitted is formed at an outer-side end of the annular space formed between the outer ring 2 and the hub ring 3. The outer ring 2 is formed by C-chamfering a boundary portion between an outer-diameter outer surface 2f and an outer-side end surface 2g. The chamfered section of the outer ring 2 is configured as a chamfered section 2h. Since the chamfered section 2h of the outer ring 2 is chamfered, an intersection is configured to be relatively small.

The inner ring 4 applies preload to the inner-side ball row 5 and the outer-side ball row 6. An annular inner raceway surface 4a is formed on the outer peripheral surface of the inner ring 4 in the circumferential direction. The inner ring 4 is fixed to the inner-side end of the hub ring 3 by caulking. That is, the inner ring 4 forms the inner raceway surface 4a on the inner side of the hub ring 3. The inner ring 4 is disposed such that the inner raceway surface 4a thereof faces the outer raceway surface 2c on the inner side of the outer ring 2.

In the inner-side ball row 5 and the outer-side ball row 6, a plurality of balls 8 as rolling bodies are annularly held by a retainer 7 made of resin. The inner-side ball row 5 is interposed in a rollable manner between the inner raceway surface 4a of the inner ring 4 and the inner-side outer raceway surface 2c of the outer ring 2. The outer-side ball row 6 is interposed in a rollable manner between the inner raceway surface 3c of the hub ring 3 and the outer-side outer raceway surface 2d of the outer ring 2.

The retainer 7 holds the ball 8. The retainer 7 is made of polyamide 46 (PA46), polyamide 66 (PA66), polyamide 9T (PA9T), polyether ether ketone (PEEK), polyphenylene sulfide (PPS), or the like, which is a synthetic resin excellent in oil resistance, abrasion resistance, and lubricity. In addition, as a reinforcing material, glass fiber, carbon fiber, or the like may be included in the resin.

The ball 8 is made of a steel ball or the like made of high carbon chromium bearing steel SUJ2. The plurality of balls 8 are rotatably held in a pocket Pt of the retainer 7.

The inner-side seal member 9 closes the inner-side opening 2a of the annular space formed between the outer ring 2 and the hub ring 3.

As illustrated in FIG. 2, the outer-side seal member 10 closes the outer-side opening 2b of the annular space formed between the outer ring 2 and the hub ring 3. The outer-side seal member 10 includes a core metal 11 formed in a substantially cylindrical shape of a steel plate made of the same material as a seal plate, and a seal section 12 fixed to the core metal 11 and configured integrally with the core metal 11.

The core metal 11 of the outer-side seal member 10 is formed in an annular shape, and includes a cylindrical portion 11a, an inner diameter portion 11b, and a disc portion 11c.

The cylindrical portion 11a is press-fitted into the inner periphery of the outer-side end of the outer ring 2 with a predetermined interference. The inner diameter portion 11b is bent and extends radially inward from the cylindrical portion 11a. The disc portion 11c extends radially outward from the cylindrical portion 11a and is in close contact with the outer-side end surface 2g of the outer ring 2. By bringing the disc portion 11c into close contact with the outer-side end surface 2g of the outer ring 2, positioning in a state of being disposed in the outer-side opening 2b of the outer-side seal member 10 can be performed with high accuracy, and the sealability provided by the outer-side seal member 10 for the outer-side opening 2b can be improved.

The seal section 12 of the outer-side seal member 10 is made of synthetic rubber such as acrylonitrile-butadiene rubber (NBR), for example, and includes a grease lip 12a, a first side lip 12b, a second side lip 12c, a weir portion 12d, a projection 12e, and a protrusion 12f.

The grease lip 12a of the seal section 12 extends radially inward from the radially inner end of the core metal 11 and toward the inner side. The tip portion of the grease lip 12a is in contact with the outer peripheral surface 3e of the hub ring 3. The first side lip 12b is disposed radially outward of the grease lip 12a, and extends radially outward and toward the outer side. The tip portion of the first side lip 12b is in contact with the outer peripheral surface 3e of the hub ring 3 on the outer side of the tip portion of the grease lip 12a. The second side lip 12c is disposed radially outward of the first side lip 12b, and extends radially outward and toward the outer side. The tip portion of the second side lip 12c is in contact with the outer peripheral surface 3e of the hub ring 3. The weir portion 12d is formed so as to cover the disc portion 11c of the core metal 11 and protrude radially outward from the core metal 11. The weir portion 12d is formed so as to protrude radially outward of the outer-side end surface 2g of the outer ring 2.

In a portion from the radially intermediate portion to the radially outer end portion of the disc portion 11c of the core metal 11, the inner-side surface is cut out, so that the portion is configured to be slightly thinner than the other portion. The thin portion of the disc portion 11c is covered with the seal section 12.

The projection 12e of the seal section 12 is configured to protrude toward the inner side (the outer-side end surface 2g side of the outer ring 2 in the axial direction) from the seal section 12 disposed in the thin portion of the disc portion 11c of the core metal 11. The protruding length of the projection 12e toward the inner side is about 0.2 mm to 0.3 mm. The projection 12e is formed in an annular shape. The projection 12e is formed in an approximately triangular shape in a cross-sectional view in which a width in the radial direction decreases toward the inner side. The projection 12e elastically deforms to come into contact with the outer-side end surface 2g of the outer ring 2 in a state where the outer-side seal member 10 is disposed in the outer-side opening 2b.

In this manner, since the projection 12e of the seal section 12 protrudes toward the inner side (the outer-side end surface 2g side of the outer ring 2) to be in contact with the outer-side end surface 2g of the outer ring 2, the sealability between the outer-side seal member 10 and the outer-side end surface 2g of the outer ring 2 (outer member) can be improved.

The core metal 11 is configured not to be disposed in the projection 12e of the seal section 12. With such a configuration, the projection 12e is relatively easily elastically deformed, and the work of press-fitting the outer-side seal member 10 into the outer-side opening 2b can be relatively easily performed.

The protrusion 12f of the seal section 12 is disposed radially outward of the projection 12e. The protrusion 12f is configured to protrude toward the inner side (the outer-side end surface 2g side of the outer ring 2 in the axial direction) from the seal section 12 disposed in the thin portion of the disc portion 11c of the core metal 11. The protrusion 12f is formed in an annular shape. The protrusion 12f is configured to have a longer length of protruding toward the inner side than that of the projection 12e. The radially outer surface of the protrusion 12f is configured as a surface substantially parallel to the axial direction, the radially inner surface of the protrusion 12f is configured as a surface inclined with respect to the axial direction, and the inner side surface (inner-side end surface) of the protrusion 12f is configured as a surface substantially orthogonal to the axial direction. That is, the protrusion 12f is formed in a substantially trapezoidal shape. The protrusion 12f (the radially inner inclined surface of the protrusion 12f) elastically deforms to come into contact with the chamfered section 2h of the outer ring 2 in a state where the outer-side seal member 10 is disposed in the outer-side opening 2b.

As described above, the seal section 12 is disposed on the radially outward of the projection 12e, and includes the protrusion 12f that protrudes toward the inner side (the outer-side end surface 2g side of the outer ring 2 in the axial direction) to be in contact with the chamfered section 2h of the outer ring 2, so that it is possible to suppress the entry of muddy water or the like to the projection 12e side (radially inner side) from the protrusion 12f, and to maintain the sealability provided by the projection 12e between the outer-side seal member 10 and the outer-side end surface 2g of the outer ring 2 (outer member) for a relatively long period.

The protruding length of the protrusion 12f toward the inner side (the outer-side end surface 2g side of the outer ring 2 in the axial direction) is preferably 0.5 mm or more. With such a configuration, it is possible to more reliably suppress the entry of muddy water or the like to the projection 12e side (radially inner side) from the protrusion 12f.

The protruding length of the protrusion 12f toward the inner side is preferably 2.0 mm or less. With such a configuration, it is possible to suppress the occurrence of deformation in which the functionality of the protrusion 12f is impaired when the outer-side seal member 10 is press-fitted into the outer-side opening 2b.

Here, a line A, a point B, and a line C illustrated in FIG. 2 will be described. The line A is an imaginary line extending radially outward from a center position P of a ball in the outer-side ball row 6 so as to be orthogonal to the axial direction. The point B indicates a position where the outer-diameter outer surface 2f of the outer ring 21 intersects the line A. The line C is an imaginary line extending outward in the axial direction from the point B.

The radially outer surface of the protrusion 12f of the seal section 12 is located radially inward of the outer-diameter outer surface 2f of the outer ring 2. The radially outer surface of the protrusion 12f is located radially inward of the line C.

By configuring the radial thickness of the protrusion 12f such that the radially outer surface of the protrusion 12f is located radially inward of the line C in this manner, it is possible to suppress the occurrence of deformation in which the functionality of the protrusion 12f is impaired when the outer-side seal member 10 is press-fitted into the outer-side opening 2b.

An inclination angle of the chamfered section 2h of the outer ring 2 is preferably 45° or less with respect to the axial direction. With such a configuration, it is possible to more reliably suppress the entry of muddy water or the like to the projection 12e side from the protrusion 12f.

The inclination angle of the chamfered section 2h of the outer ring 2 is preferably 10° or more with respect to the axial direction. With such a configuration, it is possible to suppress the occurrence of deformation in which the functionality of the protrusion 12f is impaired when the outer-side seal member 10 is press-fitted into the outer-side opening 2b.

It is preferable that the radially inner surface (the surface in contact with the chamfered section 2h of the outer ring 2) of the protrusion 12f of the seal section 12 is configured to be inclined to the axial center side at 20° or less (0° or more and 20° or less) with respect to the inclination angle of the chamfered section 2h of the outer ring 2. With such a configuration, it is possible to suppress the occurrence of deformation in which the functionality of the protrusion 12f is impaired when the outer-side seal member 10 is press-fitted into the outer-side opening 2b.

The core metal 11 is configured not to be disposed in the protrusion 12f of the seal section 12. With such a configuration, the projection 12e is relatively easily elastically deformed, and the work of press-fitting the outer-side seal member 10 into the outer-side opening 2b can be relatively easily performed.

Note that the radially inner surface of the protrusion 12f may be configured as a labyrinth lip as a configuration not in contact with the chamfered section 2h of the hub ring 3.

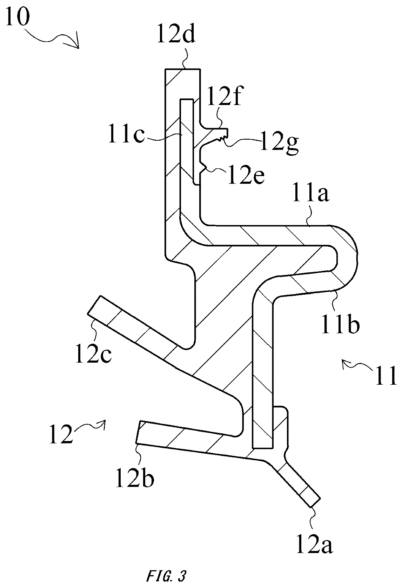

A modification of the seal section 12 will be described with reference to FIG. 3. In the embodiment illustrated in FIG. 3, a part of the configuration of the seal section 12 is different, and the same components, the same parts, or components or parts having the same function are denoted by the same reference numerals, and a detailed description thereof is omitted.

As illustrated in FIG. 3, the radially inner surface (a surface in contact with the chamfered section 2h of the outer ring 2) of the protrusion 12f of the seal section 12 has an uneven portion 12g. The uneven portion 12g is provided at the inner-side end of the radially inner surface of the protrusion 12f. The uneven portion 12g is configured with ridges. With such a configuration, a contact pressure provided by the surface in contact with the chamfered section 2h by the protrusion 12f can be configured to be relatively high, and the entry of muddy water or the like to the projection 12e side (radially inner side) from the protrusion 12f can be suppressed more reliably. Note that the uneven portion 12g is not limited to being configured with ridges, and may be formed to have a plurality of dot-shaped convex portions, for example.

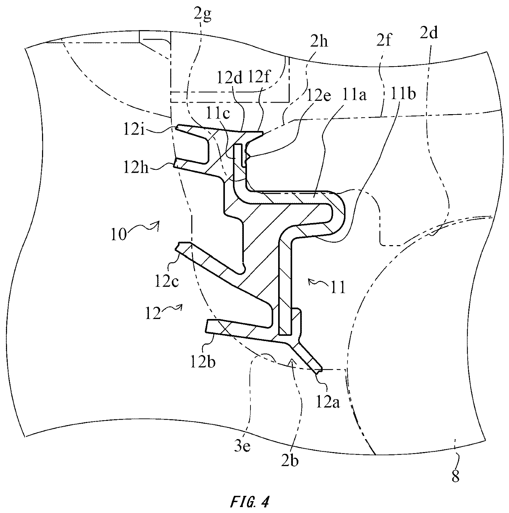

A modification of the seal section 12 will be described with reference to FIG. 4. In the embodiment illustrated in FIG. 4, a part of the configuration of the seal section 12 is different, and the same components, the same parts, or components or parts having the same function are denoted by the same reference numerals, and a detailed description thereof is omitted.

As illustrated in FIG. 4, the weir portion 12d of the seal section 12 does not protrude radially outward from the outer-diameter outer surface 2f of the outer ring 2 and is located radially inward from the outer-diameter outer surface 2f of the outer ring 2. The radial position of the radially outer end surface of the weir portion 12d is configured to substantially coincide with the radial position of the radially outer end surface of the protrusion 12f, and is configured such that the radially outer end surface of the weir portion 12d and the radially outer end surface of the protrusion 12f are continuous.

The seal section 12 includes a third side lip 12h and a fourth side lip 12i. The third side lip 12h is disposed radially outward of the second side lip 12c, and extends radially outward and toward the outer side. The tip portion of the third side lip 12h is in contact with the outer peripheral surface 3e of the hub ring 3. Note that the tip portion of the third side lip 12h may be configured as a labyrinth lip as a configuration not in contact with the outer peripheral surface 3e of the hub ring 3. The fourth side lip 12i is disposed radially outward of the third side lip 12h, and extends radially outward and toward the outer side. The tip portion of the fourth side lip 12i is close to but not in contact with the outer peripheral surface 3e of the hub ring 3, and is configured as a labyrinth lip. Note that the tip portion of the fourth side lip 12i may be in contact with the outer peripheral surface 3e of the hub ring 3. With such a configuration, it is possible to suppress the entry of muddy water or the like to the radially inner side.

Although the embodiment of the present invention has been described above, the present invention is not limited to such an embodiment in any way, and is merely an example, and it is needless to say that the present invention can be implemented in various forms without departing from the gist of the present invention. The scope of the present invention is indicated by the description of the claims, and further includes the equivalent meaning described in the claims and all changes within the scope.

### REFERENCE SIGNS LIST

- 1: BEARING DEVICE FOR VEHICLE WHEEL

- 2: OUTER RING (OUTER MEMBER)
- 2a: INNER-SIDE OPENING
- 2b: OUTER-SIDE OPENING
- 2c: OUTER SURFACE RACEWAY SURFACE
- 2d: OUTER SURFACE RACEWAY SURFACE
- 2e: FLANGE
- 2f: OUTER-DIAMETER OUTER SURFACE
- 2g: OUTER-SIDE END SURFACE
- 2h: CHAMFERED SECTION
- 3: HUB RING (INNER MEMBER)
- 3a: SMALL-DIAMETER STEP PORTION
- 3b: FLANGE
- 3c: INNER RACEWAY SURFACE
- 3d: HUB BOLT
- 3e: OUTER PERIPHERAL SURFACE
- 4: INNER RING (INNER MEMBER)
- 4a: INNER RACEWAY SURFACE
- 5: INNER-SIDE BALL ROW
- 6: OUTER-SIDE BALL ROW
- 7: RETAINER
- 8: BALL
- 9: INNER-SIDE SEAL MEMBER
- 10: OUTER-SIDE SEAL MEMBER
- 11: CORE METAL
- 12: SEAL SECTION
- 12a: GREASE LIP
- 12b: FIRST SIDE LIP
- 12c: SECOND SIDE LIP
- 12d: WEIR PORTION
- 12e: PROJECTION
- 12f: PROTRUSION
- 12g: UNEVEN PORTION
- 12h: THIRD SIDE LIP
- 12i: FOURTH SIDE LIP

## Claims

1. A bearing device for a vehicle wheel, comprising:
an outer member that has an outer raceway surface formed on an inner periphery thereof;
an inner member that has an inner raceway surface formed to face the outer raceway surface;
a plurality of rolling bodies that are interposed in a rollable manner between both raceway surfaces of the outer member and the inner member; and
a seal member that closes an opening of an annular space formed between the outer member and the inner member, wherein
the outer member has a chamfered section formed by chamfering a boundary portion between an outer-diameter outer surface and an end surface of the outer member,
the seal member includes a core metal and a seal section fixed to the core metal, and
the seal portion includes a projection that protrudes toward the outer member in an axial direction to be in contact with the end surface of the outer member, and a protrusion that is disposed radially outward of the projection and protrudes toward the outer member in the axial direction to be in contact with the chamfered section of the outer member.

2. The bearing device for a vehicle wheel according to claim 1, wherein a protruding length of the protrusion toward the outer member is 0.5 mm or more.

3. The bearing device for a vehicle wheel according to claim 1, wherein an inclination angle of the chamfered section of the outer member is 45° or less with respect to the axial direction.

4. The bearing device for a vehicle wheel according to claim 1, wherein a surface of the protrusion in contact with the chamfered section is inclined to an axial center side at 20° or less with respect to an inclination angle of the chamfered section of the outer member.

5. The bearing device for a vehicle wheel according to any one of claims 1 to 4, wherein a surface of the protrusion in contact with the chamfered section has an uneven portion.
